Europäisches Patentamt

European Patent Office

Office européen des brevets

(19)

(11) **EP 0 576 833 B1**

(12) **EUROPÄISCHE PATENTSCHRIFT**

(45) Veröffentlichungstag und Bekanntmachung des Hinweises auf die Patenterteilung:
**07.03.2001 Patentblatt 2001/10**

(51) Int Cl.$^7$: **C07F 9/141**, C08K 9/02, C08K 9/04, C07F 9/6574, C07F 9/48

(21) Anmeldenummer: **93108562.5**

(22) Anmeldetag: **27.05.1993**

(54) **Verfahren zur Herstellung hydrolysestabiler dreiwertiger Phosphorverbindungen und ihre Verwendung als Stabilisatoren für thermoplastische Kunststoffe**

Process for preparing hydrolytically stable trivalent phosphorus compounds and their use as stabilisers for thermoplastic materials

Procédé de préparation de dérivés du phosphore trivalent stables à l'hydrolyse et leur utilisation comme stabilisants de matériaux thermoplastiques

(84) Benannte Vertragsstaaten:
**AT BE CH DE ES FR GB IT LI NL**

(30) Priorität: **04.06.1992 DE 4218411**
**28.11.1992 DE 4240043**

(43) Veröffentlichungstag der Anmeldung:
**05.01.1994 Patentblatt 1994/01**

(73) Patentinhaber: **Clariant GmbH**
**65929 Frankfurt am Main (DE)**

(72) Erfinder:
• **Kleiner, Hans-Jerg, Dr.**
**W-6242 Kronberg/Ts. (DE)**
• **Regnat, Dieter, Dr.**
**W-6000 Frankfurt/Main (DE)**
• **Pfahler, Gerhard, Dr.**
**W-8900 Augsburg (DE)**

(74) Vertreter: **D'haemer, Jan Constant**
**Clariant International Ltd.,**
**Rothausstrasse 61**
**4132 Muttenz 1 (CH)**

(56) Entgegenhaltungen:
**EP-A- 0 400 454**     **EP-A- 0 516 006**
**US-A- 3 240 751**     **US-A- 3 809 676**
**US-A- 4 086 304**     **US-A- 4 402 858**
**US-A- 4 443 572**     **US-A- 4 496 495**
**US-A- 5 208 362**

• **CHEMICAL ABSTRACTS, vol. 55, no. 24, 27. November 1961, Columbus, Ohio, US; abstract no. 24531i, & ZHUR. OBSHCHEI. KHIM. Bd. 31 , 1961 Seiten 1767 - 1770 M. G. IMAEV 'Hydrolysis of trialkyl phosphites in the presence of inorganic and organic bases'**

EP 0 576 833 B1

**Beschreibung**

Die Erfindung bezieht sich auf ein Verfahren zur Herstellung hydrolysestabiler dreiwertiger phosphororganischer Verbindungen, die als Stabilisatoren für thermoplastische Kunststoffe verwendet werden sollen.

Synthetische Polymere müssen bekanntlich gegen unerwünschte oxidative, thermische und photochemische Schädigung während der Herstellung, der Verwendung und des Gebrauchs durch Stabilisatoren oder Stabilisatorsysteme geschützt werden. Solche Stabilisatoren bestehen beispielsweise aus einem phenolischen Antioxidans und einem oder mehreren Costabilisatoren, die teilweise auch die Wirkung der phenolischen Komponente synergistisch verstärken. Zu den gebräuchlichen Costabilisatoren gehören beispielsweise ortho-alkylierte Arylphosphite und Phosphonite.

Derartige dreiwertige Phosphorverbindungen technischer Qualität sind teilweise nicht hydrolysestabil und können dann im Laufe der Zeit ihre stabilisierende Eigenschaft verlieren. Sie können auch durch die Luftfeuchtigkeit hydrolytisch gespalten werden, wodurch die Lagerfähigkeit abnimmt. Obwohl die Frage der Hydrolysestabilität von großer technischer Bedeutung ist, sind die Ursachen nur wenig untersucht (vgl. M. Göghova, Chem. Papers 43 (1989), 421 - 432). Es sind deshalb auch kaum Maßnahmen bekannt, die zu einer Verbesserung der Hydrolysestabilität führen.

Bekannt ist, daß die Hydrolysestabilität von Phosphiten durch Zusatz von Stickstoff enthaltenden Basen verbessert werden kann (vgl. EP 143 464). Die Menge des zugesetzten Amins beträgt 5 bis 30 Gew.%. Der Zusatz von Aminen hat jedoch verschiedene Nachteile, insbesondere eine unerwünschte Gelbfärbung des stabilisierten Polymers.

**In US 3,240,751, US 5, 208,362, US 4,443,572, US 4,402,858, US 4,086,304, US 4,496,495, EP-A-0 400 454 und in CA, Vol. 55, No. 24, abstract No. 24531i wird die Stabilisierung von Phosphiten beschrieben.**

**US 3,809,676 offenbart die Stabilisierung von Phosphoniten, wobei ein komplexes Reaktionssystem notwendig ist und sehr hohe Mengen an Metallverbindungen zugesetzt werden müssen.**

Es bestand daher die Aufgabe, ein Verfahren zu finden, welches die Hydrolysestabilität ohne den Zusatz derartiger Stickstoff enthaltender Basen verbessert.

Gefunden wurde, daß die Behandlung mit bestimmten anorganischen Verbindungen die Aufgabe zu lösen vermag.

Die Erfindung betrifft somit ein Verfahren zur Herstellung hydrolysestabiler dreiwertiger Phosphorverbindungen der Formel (I)

$$R^3\text{-}[P(OR^2)_2]_n \qquad (I)$$

worin
n 1 oder 2 ist,

$R^2$ einen linearen oder verzweigten $C_8$-$C_{20}$-Alkylrest oder einen Phenylrest, der durch einen oder mehrere lineare oder verzweigte $C_1$-$C_8$-Alkylreste oder durch $C_5$-$C_8$-Cycloalkyl-, $C_6$-$C_{10}$-Aryl oder $C_7$-$C_{10}$-Aralkylreste substituiert sein kann, bedeutet, $R^3$ bei n = 1 einen Phenyl- oder Benzylrest, welcher 1 bis 3 Substituenten tragen kann, einen $\alpha$-Methylbenzyl-, $\alpha,\alpha$-Dimethylbenzyl- oder Naphthylrest oder einen 1 bis 5 Substituenten tragenden Naphthylrest bedeutet, wobei die Substituenten gleich oder verschieden sind und einen linearen oder verzweigten $C_1$-$C_8$-Alkylrest, einen $C_1$-$C_8$-Alkoxyrest, einen $C_1$-$C_{12}$-Alkylthiorest, einen $C_1$-$C_8$-Dialkylaminorest, einen $C_6$-$C_{10}$-Arylrest, einen $C_6$-$C_{10}$-Aryloxyrest oder Halogen mit einer Ordnungszahl von 9 bis 35 darstellen,

$R^3$ bei n = 2 einen Phenylenrest, einen Biphenylenrest, einen Naphthylenrest, einen Diphenylenoxidrest, die unsubstituiert sind oder 1 bis 4 lineare oder verzweigte $C_1$-$C_8$-Alkylreste tragen, darstellt,

dadurch gekennzeichnet, daß man die Verbindungen der Formel (I) mit 0,005 bis 5 Gew.-% eines Oxids, eines Hydroxids oder eines Carbonats der Metalle Lithium, Calcium, Barium, Magnesium, Zink und/oder Mangan behandelt, die entstandene dreiwertige Phosphorverbindung in einem Lösemittel löst, von unlöslichen Rückständen befreit und aus der Lösung gewinnt.

Die Erfindung betrifft weiterhin die Verwendung dieser Verbindungen als Stabilisatoren für thermoplastische Kunststoffe und die diese Verbindungen enthaltenden Formmassen.

Nach dem erfindungsgemäßen Verfahren werden dreiwertige organische Phosphorverbindungen technischer Qualität behandelt. Diese Phosphorverbindungen sind solche der Formel (1)

$$R^{3\text{-}}[P(OR^2)_2]_n \qquad (I).$$

Darin ist
n 1 oder 2,

$R^2$ ein linearer oder verzweigter $C_8$-$C_{20}$-Alkylrest oder steht für einen Phenylrest, der durch einen oder mehrere lineare oder verzweigte $C_1$-$C_8$-Alkylreste oder durch $C_5$-$C_8$-Cycloalkyl-, $C_6$-$C_{10}$-Aryl- oder $C_7$-$C_{10}$-Aralkylreste substituiert sein kann, vorzugsweise ein $C_{18}$-Alkylrest oder 2,4-Di-t-butylphenylrest,

$R^3$ bei n = 1 ein Phenyl- oder Benzylrest, welcher 1 bis 3 Substituenten tragen kann, ein α-Methylbenzyl-, α,α-Dimethylbenzyl- oder Naphthylrest oder ein 1 bis 5 Substituenten tragender Naphthylrest, wobei die Substituenten gleich oder verschieden sind und einen linearen oder verzweigten $C_1$-$C_8$-Alkylrest, einen $C_1$-$C_8$-Alkoxyrest, einen $C_1$-$C_{12}$-Alkylthiorest, einen $C_1$-$C_8$-Dialkylaminorest, einen $C_6$-$C_{10}$-Arylrest, einen $C_6$-$C_{10}$-Aryloxyrest oder Halogen mit einer Ordnungszahl von 9 bis 35 darstellen, und vorzugsweise ein Naphthyl- oder Biphenylrest,

$R^3$ bei n = 2 ein Phenylenrest, ein Biphenylenrest, ein Naphthylenrest, ein Diphenylenoxidrest, die unsubstituiert sind oder 1 bis 4 lineare oder verzweigte $C_1$-$C_8$-Alkylreste tragen, vorzugsweise ein Biphenylen- oder Naphthylenrest.

Von den Verbindungen der Formel (I) werden bevorzugt eingesetzt 1-Naphthyl-phosphonigsäure-bis-(2,4-di-t-butylphenyl)phosphonit, Tetrakis-(2,4-di-t-butylphenyl)-4,4'-biphenylendiphosphonit, 2,4,6-Trimethylphenyl-phosphonigsäure-bis-(2,4-di-t-butylphenyl)phosphonit, Tetrakis-(2,4-di-t-butylphenyl)-4,4'-diphenylenoxid-diphosphit.

Besonders bevorzugt eingesetzt wird Tetrakis-(2,4-di-t-butylphenyl)-4,4'-biphenylendiphosphonit. Diese Verbindung kann nach den bisher bekannten Verfahren nur im Gemisch mit hierzu stellungsisomeren Verbindungen, stellungsisomeren Biphenylmonophosphoniten und weiteren dreiwertigen Phosphorverbindungen erhalten werden, wobei die Produktgemische unterschiedlich hydrolysestabil sind und für technische Einsatzzwecke nicht einfach handhabbar sind.

Die Verbindungen der Formel (I) werden mit einem Oxid, Hydroxid oder Carbonat, der Metalle Lithium, Calcium, Barium, Magnesium, Zink, und/oder Mangan, besonders bevorzugt Magnesium. Geeignete Oxide sind Magnesiumoxid, Calciumoxid, Bariumoxid und Zinkoxid, geeignete Carbonate Lithiumcarbonat, Magnesiumcarbonat, Calciumcarbonat und Zinkcarbonat. Bevorzugt sind Magnesiumoxid, Zinkoxid, Zinkcarbonat und Magnesiumcarbonat für die Behandlung in Lösung oder Suspension sowie Magnesiumoxid, Lithiumhydroxid, Lithiumcarbonat und Magnesiumcarbonat für die Behandlung in der Schmelze. Die Metallverbindung wird in einer Menge von 0,005 bis 5, vorzugsweise 0,05 bis 2,0 Gew.%, bezogen auf die Phosphorverbindung, eingesetzt.

Die Behandlung der Phosphorverbindung mit der Metallverbindung in Lösung oder Suspension erfolgt durch Vermengen der Verbindungen entweder im trocknen Zustand oder in einem Löse- oder Suspensionsmittel. Als Löse- oder Suspensionsmittel kommen beispielsweise in Frage Tetrahydrofuran, Methylcyclohexan, Toluol, Chlorbenzol, Methanol, Ethanol, Isopropanol oder Wasser. Bei Anwendung eines Löse- oder Suspensionsmittels wird die Phosphorverbindung und die Metallverbindung gelöst oder suspendiert und einige Zeit gerührt oder digeriert. In diesem Fall kann die Metallverbindung abgetrennt werden.

Eine besonders bevorzugte Behandlungsweise ist das Suspendieren der Phosphorverbindung und der Metallverbindung in Wasser, Rühren, Abtrennen des Feststoffes, Aufnehmen des Rückstandes in einem Lösemittel und Abtrennen der unlöslichen Bestandteile. Die Lösung wird eingedampft und das feste Produkt zerkleinert.

Die Behandlung erfolgt bei einer Temperatur von 10 bis 100°C, vorzugsweise 15 bis 50°C und dauert in der Regel 1 min bis 24 h, vorzugsweise 2 min bis 1 h.

Die Behandlung der Phosphorverbindung mit der Metallverbindung in der Schmelze erfolgt durch Zumischen der Metallverbindungen zur geschmolzenen Phosphorverbindung. Nach erfolgter Behandlung läßt man die Schmelze abkühlen und das feste Produkt wird zerkleinert. Es kann vorteilhaft sein, die Phosphorverbindungen nach der Behandlung mit der Metallverbindung in einem Lösemittel zu lösen, von unlöslichen Rückständen zu befreien und anschließend durch Abdestillieren des Lösemittels zu gewinnen. Als geeignete Lösemittel kommen beispielsweise in Frage Tetrahydrofuran, Methylcyclohexan, Toluol, Chlorbenzol, Dichlorbenzol oder Isopropanol.

Die Behandlung erfolgt bei einer Temperatur von 20 bis 250°C, vorzugsweise 70 bis 200°C, insbesondere 100 bis 150°C, und dauert in der Regel 1 min bis 24 h, vorzugsweise 2 min bis 5 h.

Die derart behandelten Phosphorverbindungen zeichnen sich durch eine besondere Hydrolyse- und Lagerstabilität aus, auch unter extremen Bedingungen.

Die erfindungsgemäß behandelten Phosphorverbindungen werden als Stabilisatoren für thermoplastische Kunststoffe eingesetzt, wobei sie gegebenenfalls mit einem phenolischen Antioxidans kombiniert werden.

Die erfindungsgemäße Kunststoff-Formmasse enthält ein thermoplastisches organisches Polymer, beispielsweise eines der nachstehend aufgeführten:

1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen, wie beispielsweise von Cyclopenten oder Norbornen.

2. Mischungen der unter 1) genannten Polymeren, beispielsweise Mischungen von Polypropylen mit Polyethylen oder mit Polyisobutylen.

3. Copolymere von Mono- und Diolefinen untereinander oder mit anderen Vinylmonomeren, wie beispielsweise Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

4. Polystyrol, Poly(p-methylstyrol).

5. Copolymere von Styrol oder $\alpha$-Methylstyrol mit Dienen oder Acrylderivaten, wie beispielsweise Styrol-Butadien, Styrol-Maleinsäureanhydrid, Styrol-Acrylnitril, Styrol-Ethylmethacrylat, Styrol-Butadien-Ethylacrylat, Styrol-Acrylnitril-Methacrylat; Mischungen von hoher Schlagzähigkeit aus Styrol-Copolymeren und einem anderen Polymer, wie beispielsweise einem Polyacrylat, einem Dien-Polymeren oder einem Ethylen-Propylen-Dien-Terpolymeren; sowie Block-Copolymere des Styrols, wie beispielsweise Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol, wie beispielsweise Styrol auf Polybutadien, Styrol und Acrylnitril auf Polybutadien, Styrol und Maleinsäureanhydrid auf Polybutadien, Styrol und Alkylacrylate oder Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, die beispielsweise als sogenannte ABS-, MBS-, ASA- oder AES-Polymere bekannt sind.

7. Polyvinylchlorid.

8. Mischpolymerisate des Vinylchlorids, welche durch die bekannten Verfahren hergestellt werden können (beispielsweise Suspensions-, Masse- oder Emulsionspolymerisation).

9. Mischpolymere des Vinylchlorids mit bis zu 30 Gew.-% an Comonomeren, wie beispielsweise Vinylacetat, Vinylidenchlorid, Vinylether, Acrylnitril, Acrylsäureester, Maleinsäuremono- oder -diester oder Olefinen, sowie Pfropfpolymerisate des Vinylchlorids.

10. Halogenhaltige Polymere, wie beispielsweise Polychloropren, Chlorkautschuk, chloriertes oder chlorsulfoniertes Polyethylen, Epichlorhydrin-homo- und -copolymere, insbesondere Polymere aus halogenhaltigen Vinylverbindungen, wie beispielsweise Polyvinylidenchlorid, Polyvinylfluorid, Polyvinylidenfluorid; sowie deren Copolymere wie von Vinylchlorid-Vinylidenchlorid, Vinylchlorid-Vinylacetat oder Vinylidenchlorid-Vinylacetat.

11. Polymere, die sich von $\alpha$-$\beta$-ungesättigten Säuren und deren Derivaten ableiten, wie Polyacrylate und Polymethacrylate, Polyacrylamide und Polyacrylnitrile.

12. Copolymere der unter 11) genannten Monomeren untereinander oder mit anderen ungesättigten Monomeren, wie beispielsweise Acrylnitril-Butadien-Copolymere, Acrylnitril-Alkylacrylat-Copolymere, Acrylnitril-Alkoxyacrylat-Copolymere, Acrylnitril-Vinylhalogenid-Copolymere oder Acrylnitril-Alkylmethacrylat-Butadien-Copolymere.

13. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.

14. Homo- und Copolymere von cyclischen Ethern, wie Polyethylenglykole, Polyethylenoxyd, Polypropylenoxyd oder deren Copolymere mit Bisglycidylethern.

15. Polyacetale, wie Polyoxymethylen, sowie solche Polyoxymethylene, die Comonomere wie beispielsweise Ethylenoxyd enthalten.

16. Polyphenylenoxyde und -sulfide und deren Mischungen mit Styrolpolymeren.

17. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte (Polyisocyanate-Polyole-Prepolymere).

18. Polyamide und Copolyamide, die sich von Diaminen und Dicarbonsäuren und/oder von Aminocarbonsäuren oder den entsprechenden Lactamen ableiten, wie Polyamid-4, Polyamid-6, Polyamid-6.6, Polyamid-6.10, Polyamid-11, Polyamid-12, Poly-2,4,4-trimethylhexamethylenterephthalamid, Poly-m-phenylenisophthalamid, sowie deren Copolymere mit Polyethern, wie beispielsweise mit Polyethylenglykol, Polypropylenglykol oder Polytetramethylenglykol.

19. Polyharnstoffe, Polyimide und Polyamid-imide.

20. Polyester, die sich von Dicarbonsäuren und Diolen und/oder von Hydroxycarbonsäuren oder den entsprechenden Lactonen ableiten, wie Polyethylenterephthalat, Polybutylenterephthalat, Poly-1,4-dimethylolcyclohexan-terephthalat, Poly-(2,2-bis-(4-hydroxyphenyl)-propan-)terephthalat, Polyhydroxybenzoate, sowie Block-Polyetherester, die sich von Polyethylen mit Hydroxyendgruppen, Dialkoholen und Dicarbonsäuren ableiten.

21. Polycarbonate und Polyestercarbonate.

22. Polysulfone, Polyethersulfone und Polyetherketone.

23. Vernetzte Polymere, die sich von Aldehyden einerseits und Phenolen, Harnstoff oder Melamin andererseits ableiten, wie Phenol-Formaldehyd-, Harnstoff-Formaldehyd-und Melamin-Formaldehydharze.

24. Trocknende und nicht trocknende Alkydharze.

25. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

26. Vernetzbare Acrylharze, die sich von substituierten Acrylsäureestern ableiten, wie beispielsweise Epoxyacrylaten, Urethan-acrylaten oder Polyester-acrylaten.

27. Alkydharze, Polyesterharze und Acrylatharze, die mit Melaminharzen, Harnstoffharzen, Polyisocyanaten oder Epoxidharzen vernetzt sind.

28. Vernetzbare Epoxidharze, die sich von Polyepoxiden ableiten, beispielsweise von Bis-glycidylethern oder von cycloaliphatischen Diepoxiden.

29. Natürliche Polymere, wie Cellulose, Naturkautschuk, Gelatine sowie deren polymerhomolog chemisch abgewandelte Derivate, wie Celluloseacetate, -propionate und -butyrate, oder Celluloseether, wie Methylcellulose.

30. Mischungen der oben erwähnten Polymeren, wie beispielsweise PP/EPDM, Polyamid-6/EPDM oder ABS, PVC/EVA, PVC/ABS, PVC/MBS, PC/ABS, PBTP/ABS, PC/ASA, PC/PBT, PVC/CPE, PVD/Acrylat, POM/thermoplastisches PUR, POM/Acrylat, POM/MBS, PPE/HIPS, PPE/Polyamid-6.6 und Copolymere, PA/HDPE, PA/PP, PA/PPE.

31. Natürlich vorkommende und synthetische organische Stoffe, welche reine Monomere oder Mischungen von Monomeren sind, wie beispielsweise Mineralöle, tierische und pflanzliche Fette, Öle und Wachse, oder Öle, Fette und Wachse auf Basis synthetischer Ester oder Mischungen dieser Stoffe.

32. Wäßrige Dispersionen von Natur- oder Synthesekautschuk.

Die Additive werden nach allgemein üblichen Methoden in die organischen Polymeren eingearbeitet. Die Einarbeitung kann beispielsweise durch Einmischen oder Aufbringen der Verbindungen und gegebenenfalls weiterer Additive in oder auf das Polymere unmittelbar nach der Polymerisation oder in die Schmelze vor oder während der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösemittels kann die Einarbeitung erfolgen. Die Verbindungen sind auch wirksam, wenn sie in ein bereits granuliertes Polymer nachträglich in einem gesonderten Verarbeitungsschritt eingebracht werden.

Die erfindungsgemäß zu verwendenden Verbindungen können auch in Form eines Masterbatches, der diese Verbindungen beispielsweise in einer Konzentration von 1 bis 75, vorzugsweise 2,5 bis 30 Gew.-% enthält, den zu stabilisierenden Polymeren zugesetzt werden.

Zusätzlich können die zu stabilisierenden organischen Polymeren noch folgende Antioxidantien enthalten, wie beispielsweise:

1. Alkylierte Monophenole, beispielsweise

2,6-Di-t-butyl-4-methylphenol, 2-t-Butyl-4,6-dimethylphenol, 2,6-Di-t-butyl-4-ethylphenol, 2,6-Di-t-butyl-4-i-butylphenol, 2,6-Di-cyclopentyl-4-methylphenol, 2-($\alpha$-Methylcyclohexyl)-4,6-dimethylphenol, 2,6-Di-octadecyl-4-methylphenol, 2,4,6-Tri-cyclohexylphenol, 2,6-Di-t-butyl-4-methoxymethylphenol.

2. Alkylierte Hydrochinone, beispielsweise

2,6-Di-t-butyl-4-methoxyphenol, 2,5-Di-t-butyl-hydrochinon, 2,5-Di-t-amyl-hydrochinon, 2,6-Diphenyl-4-octadecyloxyphenol.

3. Hydroxylierte Thiodiphenylether, beispielsweise

2,2'-Thio-bis-(6-t-butyl-4-methylphenol), 2,2'-Thio-bis-(4-octylphenol), 4,4'-Thio-bis-(6-t-butyl-3-methylphenol), 4,4'-Thio-bis-(6-t-butyl-2-methylphenol).

4. Alkyliden-Bisphenole, beispielsweise

2,2'-Methylen-bis-(6-t-butyl-4-methylphenol), 2,2'-Methylen-bis(6-t-butyl-4-ethylphenol), 2,2'-Methylen-bis-[4-methyl-6-($\alpha$-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-t-butylphenol), 2,2'-Ethyliden-bis-(4,6-di-t-butylphenol), 2,2'-Ethyliden-bis-(6-t-butyl-4-isobutylphenol), 2,2'-Methylen-bis-[6-($\alpha$-methylbenzyl)-4-nonylphenol], 2,2'-Methylen-bis-[6-($\alpha,\alpha$-dimethylbenzyl)-4-nonylphenol], 4,4'-Methylen-bis-(2,6-di-t-butylphenol), 4,4'-Methylen-bis(6-t-butyl-2-methylphenol), 1,1-Bis-(5-t-butyl-4-hydroxy-2-methylphenyl)-butan, 2,6-Di-(3-t-butyl-5methyl-2-hydroxybenzyl)-4-methylphenol, 1,1,3-Tris-(5-t-butyl-4-hydroxy-2-methylphenyl)-butan, 1,1-Bis-(5-t-butyl-4-hydroxy-2-methylphenyl)-3-n-dodecylmercaptobutan, Di-(3-t-butyl-4-hydroxy-5-methylphenyl)-dicyclo-pentadien, Di-[2-(3'-t-butyl-2'-hydroxy-5'-methyl-benzyl)-6-t-butyl-4-methyl-phenyl]-terephthalat, Ethylenglykol-bis-[3,3-bis-(3'-t-butyl-4'-hydroxyphenyl)-butyrat.

5. Benzylverbindungen, beispielsweise

1,3,5-Tri-(3,5-di-t-butyl-4-hydroxybenzyl)-2,4,6-trimethylbenzol, Di-(3,5-di-t-butyl-4-hydroxybenzyl)-sulfid, 3,5-Di-t-butyl-4-hydroxybenzyl-mercaptoessigsäure-isooctylester, Bis-(4-t-butyl-3-hydroxy-2,6-dimethylbenzyl)-dithiol-terephthalat, 1,3,5-Tris-(3,5-di-t-butyl-4-hydroxybenzyl)-isocyanurat, 1,3,5-Tris-(4-t-butyl-3-hydroxy-2,6-dimethylbenzyl)-isocyanurat, 3,5-Di-t-butyl-4-hydroxybenzyl-phosphonsäure-dioctadecylester, Calciumsalz des 3,5-Di-t-butyl-4-hydroxybenzyl-phosphonsäuremono-ethylesters.

6. Acylaminophenole, beispielsweise

4-Hydroxy-laurinsäureanilid, 4-Hydroxy-stearinsäureanilid, 2,4-Bis-octylmercapto-6-(3,5-di-t-butyl-4-hydroxy-anilino)-s-triazin, N-(3,5-Di-t-butyl-4-hydroxyphenyl)-carbaminsäure-octylester.

7. Ester der $\beta$-(3,5-Di-t-butyl-4-hydroxyphenyl)-propionsäure mit ein- oder mehrwertigen Alkoholen, wie z.B. mit Methanol, Diethylenglykol, Octadecanol, Triethylenglykol, 1,6-Hexandiol, Pentaerythrit, Neopentylglykol, Tris-hydroxyethyl-isocyanurat, Thiodiethylenglykol, Di-hydroxyethyl-oxalsäurediamid.

8. Ester der $\beta$-(5-t-Butyl-4-hydroxy-3-methylphenyl)-propionsäure mit ein- oder mehrwertigen Alkoholen, wie z.B. mit Methanol, Diethylenglykol, Octadecanol, Triethylenglykol, 1,6-Hexandiol, Pentaerythrit, Neopentylglykol, Tris-hydroxyethyl-isocyanurat, Thiodiethylenglykol, Di-hydroxyethyl-oxalsäurediamid.

9. Amide der $\beta$-(3,5-Di-t-butyl-4-hydroxyphenyl)-propionsäure, wie z.B. N,N'-Di-(3,5-di-t-butyl-4-hydroxyphenylpropionyl)-hexamethylendiamin, N,N'-Di-(3,5-di-t-butyl-4-hydroxyphenylpropionyl)-trimethylendiamin, N,N'-Di-(3,5-di-t-butyl-4-hydroxyphenylpropionyl)-hydrazin.

Daneben können die zu stabilisierenden Polymeren noch weitere Additive enthalten, wie beispielsweise:

1.UV-Adsorber und Lichtschutzmittel

1.1 2-(2'-Hydroxyphenyl)-benztriazole, wie z.B. das 5'-Methyl-, 3',5'-Di-t-butyl-, 5'-t-Butyl-, 5'-(1,1,3,3-Tetramethylbutyl)-, 5-Chlor-3',5'-di-t-butyl, 5-Chlor-3'-t-butyl-5'-methyl, 3'-sec.-Butyl-5'-t-butyl, 4'-Octoxy-, 3',5'-Di-t-amyl-, 3',5'-Bis($\alpha,\alpha$-dimethylbenzyl)-Derivat.

1.2 2-Hydroxybenzophenone, beispielsweise das 4-Hydroxy-, 4-Methoxy-, 4-Octoxy, 4-Decyloxy, 4-Dodecyloxy-, 4-Benzyloxy-, 4,2',4'-Trihydroxy-, 2'-Hydroxy-4,4'-dimethoxy-Derivat.

1.3 Ester von gegebenenfalls substituierten Benzoesäuren, beispielsweise 4-t-Butyl-phenylsalicylat, Phenylsalicylat, Octylphenylsalicyalat, Dibenzoylresorcin, Bis-(4-t-butylbenzoyl)resorcin, Benzoylresorcin, 3,5-Di-t-butyl-4-hydroxybenzoesäure-2,4-di-t-butylphenylester, 3,5-Di-t-butyl-4-hydroxybenzoesäure-hexadecylester.

1.4 Acrylate, beispielsweise

α-Cyan-β,β-diphenylacrylsäure-ethylester bzw. -iso-octylester,

α-Carbomethoxyzimtsäuremethylester, α-Cyano-β-methyl-p-methoxyzimtsäure-methylester bzw. -butylester, α-Carbomethoxy-p-methoxyzimtsäure-methylester, N-(β-Carbomethoxy-9-cyano-vinyl)-2-methyl-indolin.

1.5 Nickelverbindungen, beispielsweise

Nickelkomplexe des 2,2'-Thio-bis-[4-(1,1,3,3-tetramethyl-butyl)-phenols], wie der 1:1- oder 1:2-Komplex, gegebenenfalls mit-zusätzlichen Liganden wie n-Butyl-amin, Triethanolamin oder N-Cyclohexyl-diethanolamin, Nickelalkyl-dithiocarbamate, Nikkelsalze von 4-Hydroxy-3,5-di-t-butyl-benzylphosphonsäure-mono-alkylestern wie vom Methyl- oder Ethylester, Nickelkomplexe von Ketoximen wie vom 2-Hydroxy-4-methyl-phenyl-undecylketoxim, Nickelkomplexe des 1-Phenyl-4-lauroyl-5-hydroxypyrazols, gegebenenfalls mit zusätzlichen Liganden, Nickelsalze der 2-Hydroxy-4-alkoxybenzophenone.

1.6 Sterisch gehinderte Amine, beispielsweise

1.6.1 Bis(2,2,6,6-tetramethylpiperidyl)-sebacat, Bis-(1,2,2,6,6-pentamethylpiperidyl)-sebacat, Bis-(2,2,6,6-tetramethylpiperidyl)-glutarat, Bis-(1,2,2,6,6-pentamethylpiperidyl)-glutarat, Bis-(2,2,6,6-tetramethylpiperidyl)-succinat, Bis-(1,2,2,6,6-pentamethylpiperidyl)-succinat, 4-Stearyloxy-2,2,6,6-tetramethylpiperidin, 4-Stearyloxy-1,2,2,6,6-pentamethylpiperidin, 4-Stearoyloxy-2,2,6,6-tetramethylpiperidin, 4-Stearoyloxy-1,2,2,6,6-pentamethylpiperidin, 2,2,6,6-Tetramethylpiperidylbehenat, 1,2,2,6,6-Pentamethylpiperidylbehenat, 2,2,4,4-Tetramethyl-7-oxa-3,20-diazadispiro-[5.1.11.2]-heneicosan-21-on, 2,2,3,4,4-Penta-methyl-7-oxa-3,20-diazadispiro-[5.1.11.2] -heneicosan-21-on, 2,2,4,4-Tetramethyl-3-acetyl-7-oxy-3,20-diaza-dispiro-[5.1.11.2] -heneicosan-21-on, 2,2,4,4-Tetramethyl-7-oxa-3,20-diaza-20-(ß-lauryl-oxycarbonylethyl)-21-oxo-dispiro-[5.1.11.2]-heneicosan, 2,2,3,4,4-Pentamethyl-7-oxa-3,20-diaza-20-(β-lauryloxy-carbonylethyl)-21-oxo-dispiro-[5.1.11.2]-heneicosan, 2,2,4,4-Tetramethyl-3-acetyl-7-oxa-3,20-diazo-20-(β-lauryloxycarbonyl-ethyl)-21-oxo-dispiro-[5.1.11.2] -heneicosan, 1,1',3,3',5,5'-Hexahydro-2,2',4,4',6,6'-hexaaza-2,2',6,6'-bismethano-7,8-dioxo-4,4'-bis-(1,2,2,6,6-pentamethyl-4-piperidyl)biphenyl, N,N',N',N'''-Tetrakis-[2,4-bis-[N-(2,2-,6,6-tetramethyl-4-piperidyl)-butylamino]-1,3,5-triazin-6-yl] -4,7-diazadecan-1,10-diamin, N,N',N'',N'''-Tetrakis[2,4-bis-[N (1,2,2,6,6-pentamethyl-4-piperidyl)-butylamino]-1,3,5-triazin-6-yl]-4,7-diazadecan-1,10-diamin, N,N',N'', N'''-Tetrakis-[2,4-bis-[N-(2,2,6,6-tetramethyl-4-piperidyl)-methoxypropylamino] -1,3,5-triazin-6-yl]-4,7-diazadecan-1,10-diamin, N,N',N'', N'''-Tetrakis-[2,4-bis-[N-(1,2,2,6,6-pentamethyl-4-piperidyl)-methoxypropylamino]-1,3,5-triazin-6-yl]-4,7-diazadecan-1,10-diamin, Bis- (1,2,2,6,6-pentamethyl-piperidyl)-n-butyl-3,5-di-t-butyl-4-hydroxy-benzylmalonat, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethyl-piperazinon).

1.6.2 Poly-N,N'-bis(2,2,6,6-tetramethyl-4-piperidyl)-1,8-diazadecylen, Kondensationsprodukt aus 1-(2-Hydroxyethyl)-2,2,6,6-tetramethyl-4-hydroxy-piperidin und Bernsteinsäure, Kondensationsprodukt aus N,N'-Bis-(2,2,6,6-tetramethyl-4-piperidyl)-hexamethylendiamin und 4-t-Octylamino-2,6-dichlor-1,3,5-triazin, Kondensationsprodukt aus N,N'-Bis-(2,2,6,6-tetramethyl-4-piperidyl)-hexamethylendiamin und 4-Morpholino-2,6-dichlor-1,3,5-triazin.

1.7 Oxalsäurediamide, beispielsweise

4,4'-Di-octyloxy-oxanilid, 2,2'-Di-octyloxy-5,5'-di-t-butyl-oxanilid, 2,2'-Didodecyloxy-5,5'-di-t-butyloxanilid, 2-Ethoxy-2'-ethyl-oxanilid, N,N'-Bis-(3-dimethylaminopropyl)-oxalamid, 2-Ethoxy-5-t-butyl-2'-ethyloxanilid und dessen Gemisch mit 2-Ethoxy-2'-ethyl-5,4-di-t-butyl-oxanilid, Gemische von o- und p-Methoxy- sowie von o- und p-Ethoxy-di-substituierten Oxaniliden.

2. Metalldesaktivatoren, beispielsweise

N,N'-Diphenyloxalsäurediamid, N-Salicylyl-N'-salicyloyl-hydrazin, N,N'-Bis-salicyloyl-hydrazin, N,N'-Bis-(3,5-di-t-butyl-4-hydroxyphenylpropionyl)-hydrazin, 3-Salicyloylamino-1,2,3-triazol, Bis-benzyliden-oxalsäuredihydrazid.

3. Phosphite und Phosphonite, beispielsweise

Triphenylphosphit, Diphenylalkylphosphite, Phenyldialkylphosphite, Trisnonyl-phenylphosphit, Trilaurylphosphit, Trioctadecylphosphit, Distearylpentaerythrityl-diphosphit, Tris-(2,4-di-t-butylphenyl)-phosphit, Diisodecyl-pentaerythrityl-diphosphit, Bis-(2,4-di-t-butylphenyl)-pentaerythrityl-diphosphit, Tristearyl-sorbityltriphosphit, Tetrakis-(2,4-di-t-butylphenyl)-4,4'-biphenylen-diphosphonit, 3,9-Bis-(2,4-di-t-butylphenoxy)-2,4,8,10-tetraoxa-3,9-diphosphaspiro-[5.5]-undecan, Tris-(2-t-butyl-4-thio-(2'-methenyl-4'-hydroxy-5'-t-butyl)-phenyl-5-methenyl)-phenylphosphit.

4. Peroxidzerstörende Verbindungen, beispielsweise

Ester der β-Thio-dipropionsäure, wie beispielsweise der Lauryl-, Stearyl-, Myristyl-oder Tridecylester, Mercaptobenzimidazol, das Zinksalz des 2-Mercapto-benzimidazols, Zink-alkyl-dithiocarbamate, Dioctadecylsulfid, Dioctadecyldisulfid, Pentaerythrittetrakis-(β-dodecylmercapto)-propionat.

5. Basische Co-Stabilisatoren, beispielsweise

Melamin, Polyvinylpyrrolidon, Dicyandiamid, Triallylcyanurat, Harnstoff-Derivate, Hydrazin-Derivate, Amine, Polyamine, Polyurethane, Alkali- und Erdalkalisalze höherer Fettsäuren oder Phenolate, beispielsweise Ca-Stearat, Zn-Stearat, Mg-Stearat, Na-Ricinoleat, K-Palmitat, Antimonbrenzcatechinat oder Zinnbrennzcatechinat, Hydroxide und Oxide von Erdalkalimetallen oder des Aluminiums, beispielsweise CaO, MgO, ZnO.

6. Nukleierungsmittel, beispielsweise

4-t-Butylbenzoesäure, Adipinsäure, Diphenylessigsäure, Dibenzylidensorbitol.

7. Füllstoffe und Verstärkungsmittel, beispielsweise

Calciumcarbonat, Silikate, Glasfasern, Asbest, Talk, Kaolin, Glimmer, Bariumsulfat, Metalloxide und -hydroxide, Ruß, Graphit.

8. Sonstige Zusätze, beispielsweise

Weichmacher, Gleitmittel, Emulgatoren, Pigmente, optische Aufheller, Flammschutzmittel, Antistatika, Treibmittel.

Die verschiedenen zusätzlichen Additive der vorgenannten Gruppen 1 bis 6 werden den zu stabilisierenden Polymeren in einer Menge von 0,01 bis 10, vorzugsweise 0,01 bis 5 Gew.-%, bezogen auf das Gesamtgewicht der Formmasse, zugesetzt. Der Mengenanteil der Additive der Gruppen 7 und 8 beträgt 1 bis 80, vorzugsweise 10 bis 50 Gew.-%, bezogen auf die gesamte Formmasse.

Die erfindungsgemäß stabilisierten organischen Polymeren können in verschiedener Form angewendet werden, beispielsweise als Folien, Fasern, Bändchen, Profile, als Beschichtungsmassen oder als Bindemittel für Lacke, Klebstoffe oder Kitte.

Die nachstehenden Beispiele sollen die Erfindung weiter erläutern.

Vergleichsbeispiel A

Herstellung von Tetrakis-(2,4-di-t-butylphenyl)-4,4'-biphenylendiphosphonit

200 mmol (= 62,4 g) 4,4'-Dibrombiphenyl wurden mit 400 mmol (= 14,6 g) Magnesiumspänen in 600 cm$^3$ Tetrahydrofuran unter Einwirkung von Ultraschall (40 kHz) in die Grignardverbindung überführt. Zu der erhaltenen Suspension tropfte man bei -20 bis -10°C eine Lösung von 400 mmol (= 190,8 g) Phosphorigsäure-bis-(2;4-di-t-butylphenylester)chlorid in 400 cm$^3$ Tetrahydrofuran/n-Heptan 1:2. Der Ansatz wurde noch eine Stunde bei 0°C und zwei Stunden bei Raumtemperatur gerührt. Danach wurde das Magnesiumsalz abfiltriert und mit 250 cm$^3$ Tetrahydrofuran/n-Heptan 1:4 gewaschen. Nach Einengen des Filtrats im Vakuum und Pulverisieren des Rückstandes erhielt man 220 g blaßgelbes Pulver mit einem Gehalt an der obengenannten Verbindung von 76 % ($^{31}$P-NMR).

Beispiel 1

Man gab jeweils 3 mmol Metalloxid oder -carbonat in 100 cm$^3$ Wasser und fügte unter intensiver Durchmischung 25 mmol (= 25 g) der nach Vergleichsbeispiel A hergestellten Phosphorverbindung zu, rührte den Ansatz 10 min, filtrierte den Feststoff ab und trocknete ihn im Vakuum. Man erhielt jeweils 25 g eines blaßgelben Pulvers, dessen Gehalt an Tetrakis-(2,4-di-t-butylphenyl)-4,4'-biphenylendiphosphonit laut $^{31}$P-NMR durch die Behandlung unverändert geblieben war. Die verbesserte Hydrolysestabilität der Produkte ist Tabelle 1 zu entnehmen.

Eingesetzt wurden die folgenden Metallverbindungen:

1a) 125 mg MgO
1b) 250 mg MgCO$_3$
1c) 175 mg CaO
1d) 200 mg ZnO
1e) 480 mg BaO

Zur Messung der Hydrolysestabilität wurden jeweils 5 g des Pulvers in 95 cm$^3$ Wasser unter Zusatz von 0,1 g eines nichtionogenen Emulgators suspendiert, bei 40°C 6 h gerührt und anschließend der pH-Wert der Flüssigkeit bestimmt.

Beispiel 2

Man vermischte jeweils 5 g der nach Beispiel 1a bis 1e erhaltenen gelblichen Pulver mit 50 cm$^3$ Methylcyclohexan, filtrierte die unlöslichen Bestandteile ab, destillierte das Lösemittel im Vakuum ab und erhielt nach dem Pulverisieren des Rückstandes 5 g eines blaßgelben Pulvers, dessen Zusammensetzung laut $^{31}$P-MNR durch die Behandlung unverändert geblieben war. Die Hydrolysestabilität der erhaltenen Produkte wurde wie in Beispiel 1 bestimmt und ist ebenfalls in Tabelle 1 aufgeführt.

Tabelle 1

| Beispiel | pH-Wert |
|----------|---------|
| Vgl.A | 3,0 |
| 1a | 9,0 |
| 1b | 8,8 |
| 1c | 6,8 |
| 1d | 6,5 |
| 1e | 5,4 |
| 2a | 7,5 |
| 2b | 9,0 |
| 2e | 6,2 |

Beispiel 3

Herstellung eines hydrolysestabilen Tetrakis-(2,4-di-t-butylphenyl)-4,4'-biphenylendiphosphonits (aus Produkt gemäß DE 21 52 481; Gehalt 41,9 %)

Man mischte 250 mg Magnesiumoxid mit 50 g Tetrakis-(2,4-di-t-butylphenyl)-4,4'-biphenylendiphosphonit in einem Mischer-Homogenisator 15 min und löste das so gewonnene Pulver in 250 cm$^3$ Toluol. Die Lösung wurde 24 h gerührt, mit einer Filterhilfe (®Corolite 2) versetzt und filtriert. Das Filtrat wurde im Vakuum vom Toluol befreit (Badendtemperatur 35°C). Man erhielt 47 g eines blaßgelben Pulvers mit einem Gehalt an obengenannter Verbindung von 41,4 % ($^{31}$P-NMR).

Zur Messung der Hydrolysestabilität wurden jeweils 5 g des Pulvers in 95 cm$^3$ Wasser unter Zusatz von 0,1 g eines nichtionogenen Emulgators suspendiert, bei 40°C 4 h gerührt und anschließend der pH-Wert der Flüssigkeit bestimmt.

| | |
|------------|------|
| Unbehandelt | 3,24 |
| Behandelt | 7,85 |

Zur Messung der Thermostabilität wurde das so hergestellte Pulver und unbehandeltes Tetrakis-(2,4-di-t-butylphenyl)-4,4'-biphenylendiphosphonit 6 Stunden an der Luft auf 120°C erhitzt und danach der Anteil an dem Diphosphonit mittels $^{31}$P-NMR bestimmt.

| | |
|------------|---------|
| Unbehandelt | 20,6 % |
| Behandelt | 36,2 %. |

Beispiel 4

Herstellung eines hydrolysestabilen Tetrakis-(2,4-di-t-butylphenyl)-4,4'-biphenylendiphosphonits

50 g Tetrakis-(2,4-di-t-butylphenyl)-4,4'-biphenylendiphosphonit (hergestellt nach DE 21 52 481; Gehalt 41,9 %) wurden unter Stickstoffatmosphäre auf 130°C erhitzt. In die Schmelze wurden unter Rühren 82 mg Magnesiumoxid gegeben und das Gemisch kurzfristig auf 150°C erhitzt. Anschließend wurde die Schmelze unter Rühren 1 h bei 130°C gehalten und dann abgekühlt. Das Produkt wurde pulverisiert. Zur Messung der Hydrolysestabilität wurden 5 g des Pulvers in 95 cm$^3$ Wasser unter Zusatz von 0,1 g eines nichtionogenen Emulgators suspendiert, bei 90°C 4 h gerührt und anschließend der pH-Wert der Flüssigkeit bestimmt. Unbehandelt pH 3,31 Behandelt pH 7,98

Beispiel 5

100 g Tetrakis-(2,4-di-t-butylphenyl)-4,4'-biphenylendiphosphonit (Produkt gemäß DE 21 52 481; Gehalt 39 %) wurden unter Stickstoffatmosphäre auf 130°C erhitzt. In die Schmelze wurden unter Rühren 123 mg Magnesiumoxid gegeben und das Gemisch unter Rühren 1 h bei 130°C gehalten und dann abgekühlt. Das Produkt wurde pulverisiert. Die Hydrolysestabilität wurde wie im Beispiel 5 bestimmt.
unbehandelt pH 3,29
Behandelt pH 6,77

Beispiel 6

50 g Tetrakis-(2,4-di-t-butylphenyl)-4,4'-biphenylendiphosphonit (Produkt gemäß DE 21 52 481; Gehalt 39 %) wurden unter Stickstoffatmosphäre auf 130°C erhitzt. In die Schmelze wurden unter Rühren 82 mg Magnesiumoxid gegeben und das Gemisch kurzfristig auf 150°C erhitzt. Nach 10 min wurde der Ansatz abgekühlt. Das Produkt wurde pulverisiert.

Die Hydrolysestabilität wurde wie im Beispiel 5 bestimmt.

Unbehandelt pH 3,30

Behandelt pH 8,13

Zur Messung der Thermostabilität wurdendas so behandelte Pulver und unbehandeltes Ausgangsprodukt 24 h an der Luft auf 120°C erhitzt und danach der Anteil an dem Diphosphonit mittels $^{31}$P-NMR bestimmt.

Unbehandelt 11,1 %

Behandelt 24,4 %

Beispiel 7

50 g Tetrakis-(2,4-di-t-butylphenyl)-4,4'-biphenylendiphosphonit (Produkt gemäß DE 21 52 481; Gehalt 39 %) wurden unter Stickstoffatmosphäre auf 130°C erhitzt. In die Schmelze wurden unter Rühren 76 g Lithiumcarbonat gegeben und das Gemisch unter Rühren 1 h bei 125 bis 130°C gehalten und dann abgekühlt. Das Produkt wurde pulverisiert.

Die Hydrolysestabilität wurde wie im Beispiel 5 bestimmt.

Unbehandelt pH 3,28

Behandelt pH 6,06

Für die Anwendungsbeispiele wurden folgende Produkte eingesetzt:

| Produkt I | Tetrakis-(2,4-di-t-butylphenyl)-4,4'-biphenylendiphosphonit, käufliches Produkt, |
|---|---|
| Produkt II | Tetrakis-(2,4-di-t-butylphenyl)-4,4'-biphenylendiphosphonit, erfindungsgemäß nachbehandelt in Abwesenheit von Wasser (Beispiel 3), |
| Produkt III | Tetrakis-(2,4-di-t-butylphenyl)-4,4'-biphenylendiphosphonit, erfindungsgemäß nachbehandelt in Gegenwart von Wasser (Beispiel 2a), |

Beispiel 8

Zur Bestimmung der Lagerstabilität wurde gesättigte KCl-Lösung in einen Exsikkator gegeben und bei 60°C aufbewahrt. Nach 2 Tagen hatte sich über der KCl-Lösung eine relative Luftfeuchtigkeit von 80 % eingestellt. Die Prüfsubstanzen wurden sodann bei diesen Bedingungen (60°C, 80 % rel.LF) gelagert. Nach 0, 4, 8, 24, 48, 72 und 144 h wurden Proben entnommen und die Abnahme der Wirksubstanz mittels $^{31}$P-NMR-Spektroskopie bestimmt und die Zeiten notiert, nach welchen nur noch die halbe Menge der ursprünglichen Substanzen nachweisbar war:

| Produkt I (Vgl.) | 20 h |
|---|---|
| Produkt II | 138 h |
| Produkt III | 64 h |

Beispiel 9

100,0 Gew.-Teile unstabilisiertes Polypropylenpulver (Dichte: 0,903 g/cm$^3$; Schmelzindex MFI 230/5: 4 g/10 min) wurden mit 0,1 Gew.-Teilen Ca-Stearat als Säureakzeptor und 0,05 Gew.-Teilen Ethylenglykol-bis-(3,3-bis-(3'-t-butyl-4'--hydroxy-phenyl)-butyrat sowie den in den Tabellen angegebenen Mengen Phosphorverbindung vermischt und mittels eines Laborextruders (Kurzkompressionsschnecke, Schneckendurchmesser: 200 mm; Länge 20 D, Düse 30 mm lang, 2 mm Durchmesser; Drehzahl: 125 Upm; Temperaturprogramm: 200/230/230°C) mehrfach extrudiert. Nach dem 1., 5. und 10. Durchgang wurden Proben aus dem Granulat entnommen und an diesen Proben der Schmelzindex nach DIN 53 735 sowie die Vergilbung als Yellowness Index nach ASTM D 1925-70 gemessen.

Die Ergebnisse sind in den Tabellen 2 und 3 aufgelistet.

Die erfindungsgemäß behandelte Phosphorverbindung bewahrt die Schmelzviskosität der Formmasse auf höchstem Niveau (kleinster MFI-Wert) und mit der größten Konstanz. Sie führt außerdem zu den besten Anfangsfarben der Prüflinge und zur geringsten Farbänderung nach 10-facher Granulierung.

Tabelle 2

| Wirkung von Phosphorverbindungen auf die Verarbeitungsstabilität von Polypropylen. Schmelzindex MFI 230/5 nach mehrfacher Granulierung (MFI in g/10 min). | | | |
|---|---|---|---|
| Phosphorverbindung        MFI nach | 1 | 5 | 10. Granulierung |
| keine | 7,5 | 12,5 | 18 |
| 0,05 Gew.-T. Produkt I (Vgl.) | 4 | 5 | 8,5 |
| 0,05 Gew.-T. Produkt II | 4 | 5 | 8,5 |
| 0,05 Gew.-T. Produkt III | 4,5 | 5 | 8,5 |

Tabelle 3

| Farbverlauf (Yellowness Index nach ASTM D 1925-70) bei mehrfacher Granulierung von Polypropylen. | | | |
|---|---|---|---|
| Phosphorverbindung        YI nach der | 1 | 5 | 10. Granulierung |
| keine | 13 | 20 | 24 |
| 0,05 Gew.-T. Produkt I (Vgl.) | 5 | 15 | 28 |
| 0,05 Gew.-T. Produkt II | 5 | 12 | 27 |
| 0,05 Gew.-T. Produkt III | 5 | 12 | 27 |

**Patentansprüche**

1. Verfahren zur Herstellung hydrolysestabiler dreiwertiger Phosphorverbindungen der Formel I

$$R^3\text{-}[P(OR^2)_2]_n \qquad\qquad (I)$$

worin

n 1 oder 2 ist,

$R^2$ einen linearen oder verzweigten $C_8$-$C_{20}$-Alkylrest oder einen Phenylrest, der durch einen oder mehrere lineare oder verzweigte $C_1$-$C_8$-Alkylreste oder durch $C_5$-$C_8$-Cycloalkyl-, $C_6$-$C_{10}$-Aryl- oder $C_7$-$C_{10}$-Aralkylreste substituiert sein kann, bedeutet,

$R^3$ bei n = 1 einen Phenyl- oder Benzylrest, welcher 1 bis 3 Substituenten tragen kann, einen $\alpha$-Methylbenzyl-, $\alpha,\alpha$-Dimethylbenzyl- oder Naphthylrest oder einen 1 bis 5 Substituenten tragenden Naphthylrest bedeutet, wobei die Substituenten gleich oder verschieden sind und einen linearen oder verzweigten $C_1$-$C_8$-Alkylrest, einen $C_1$-$C_8$-Alkoxyrest, einen $C_1$-$C_{12}$-Alkylthiorest, einen $C_1$-$C_8$-Dialkylaminorest, einen $C_6$-$C_{10}$-Arylrest, einen $C_6$-$C_{10}$-Aryloxyrest oder Halogen mit einer Ordnungszahl von 9 bis 35 darstellen,

$R^3$ bei n = 2 einen Phenylenrest, einen Biphenylenrest, einen Naphthylenrest, einen Diphenylenoxidrest, die unsubstituiert sind oder 1 bis 4 lineare oder verzweigte $C_1$-$C_8$-Alkylreste tragen, darstellt,

dadurch gekennzeichnet, daß man die Verbindungen der Formel I mit 0,005 bis 5 Gew.-% eines Oxids, eines Hydroxids oder eines Carbonats der Metalle Lithium, Calcium, Barium, Magnesium, Zink und/oder Mangan behandelt, die entstandene dreiwertige Phosphorverbindung in einem Lösemittel löst, von unlöslichen Rückständen befreit und aus der Lösung gewinnt.

2. Verfahren nach Anspruch 1, dadurch gekennzeichnet, daß die Behandlung in einem Suspensionsmittel durchgeführt wird.

3. Verfahren nach Anspruch 1, dadurch gekennzeichnet, daß die Behandlung in einem Lösemittel durchgeführt wird.

4. Verfahren nach Anspruch 1, dadurch gekennzeichnet, daß die Behandlung in Wasser durchgeführt wird.

**5.** Verfahren nach Anspruch 1, dadurch gekennzeichnet, daß die Behandlung in der Schmelze durchgeführt wird.

**6.** Verfahren nach Anspruch 1, dadurch gekennzeichnet, daß die Phosphorverbindung nach der Behandlung mit der Metallverbindung in einem Lösemittel gelöst, von unlöslichen Rückständen befreit und aus der Lösung gewonnen wird.

**7.** Verwendung der nach Anspruch 1 hergestellten hydrolysestabilen Phosphorverbindungen der Formel I als Stabilisatoren für thermoplastische Kunststoffe.

**8.** Verfahren zum Stabilisieren von thermoplastischen Kunststoffen, dadurch gekennzeichnet, daß man den Kunststoffen 0,01 bis 10 Gew.-% einer Phosphorverbindung der Formel I zusetzt, welche mit 0,005 bis 5 Gew.-% eines Oxids, eines Hydroxids, eines Carbonats, eines Bicarbonats oder eines Carboxylats, eines Metalls der Gruppen 1a, 2a, 2b und 7b des Periodensystems der Elemente behandelt worden ist.

**9.** Thermoplastische Kunststoff-Formmasse, bestehend aus 90 bis 99,9 Gew.-% eines thermoplastischen Polymeren und 0,01 bis 10 Gew.-% einer Phosphorverbindung der Formel I

$$R^3\text{-}[P(OR^2)_2]_n \qquad\qquad (I)$$

worin

n 1 oder 2 ist,

$R^2$ einen linearen oder verzweigten $C_8$-$C_{20}$-Alkylrest oder einen Phenylrest, der durch einen oder mehrere lineare oder verzweigte $C_1$-$C_8$-Alkylreste oder durch $C_5$-$C_8$-Cycloalkyl-, $C_6$-$C_{10}$-Aryl- oder $C_7$-$C_{10}$-Aralkylreste substituiert sein kann, bedeutet,

$R^3$ bei n = 1 einen Phenyl- oder Benzylrest, welcher 1 bis 3 Substituenten tragen kann, einen $\alpha$-Methylbenzyl-, $\alpha,\alpha$-Dimethylbenzyl- oder Naphthylrest oder einen 1 bis 5 Substituenten tragenden Naphthylrest bedeutet, wobei die Substituenten gleich oder verschieden sind und einen linearen oder verzweigten $C_1$-$C_8$-Alkylrest, einen $C_1$-$C_8$-Alkoxyrest, einen $C_1$-$C_{12}$-Alkylthiorest, einen $C_1$-$C_8$-Dialkylaminorest, einen $C_6$-$C_6$-$C_{10}$-Arylrest, einen $C_6$-$C_{10}$-Aryloxyrest oder Halogen mit einer Ordnungszahl von 9 bis 35 darstellen, und

$R^3$ bei n = 2 einen Phenylenrest, einen Biphenylenrest, einen Naphthylenrest, einen Diphenylenoxidrest, die unsubstituiert sind oder 1 bis 4 lineare oder verzweigte $C_1$-$C_8$-Alkylreste tragen, darstellt,

dadurch gekennzeichnet, daß die Verbindungen der Formel I mit 0,005 bis 5 Gew.-% eines Oxids, eines Hydroxids, eines Carbonats, eines Bicarbonats oder eines Carboxylats eines Metalls der Gruppen 1a, 2a, 2b und 7b des Periodensystems der Elemente behandelt

**Claims**

**1.** A process for the preparation of hydrolysis-stable trivalent phosphorus compounds of the formula I

$$R^3\text{-}[P(OR^2)_2]_n \qquad\qquad (I)$$

wherein

n is 1 or 2,

$R^2$ is a linear or branched $C_8$-$C_{20}$-alkyl radical or a phenyl radical, which can be substituted by one or more linear or branched $C_1$-$C_8$-alkyl radicals or by $C_5$-$C_8$-cycloalkyl, $C_6$-$C_{10}$-aryl or $C_7$-$C_{10}$-aralkyl radicals,

$R^3$, if n = 1, is a phenyl or benzyl radical, which can carry 1 to 3 substituents, an $\alpha$-methylbenzyl, $\alpha,\alpha$-dimeth-

ylbenzyl or naphthyl radical or a naphthyl radical which carries 1 to 5 substituents, in which the substituents are identical or different and are a linear or branched $C_1$-$C_8$-alkyl radical, a $C_1$-$C_8$-alkoxy radical, a $C_1$-$C_{12}$-alkylthio radical, a $C_1$-$C_8$-dialkylamino radical, a $C_6$-$C_{10}$-aryl radical, a $C_6$-$C_{10}$-aryloxy radical or halogen having an atomic number of 9 to 35 and

$R^3$, if n = 2, is a phenylene radical, a biphenylene radical, a naphthylene radical or a diphenylene oxide radical, which are unsubstituted or carry 1 to 4 linear or branched $C_1$-$C_8$-alkyl radicals,

which comprises treating the compounds of the formula I with 0.005 to 5% by weight of an oxide, a hydroxide or a carbonate of the metals lithium, calcium, barium, magnesium, zinc and/or manganese, dissolving the resulting trivalent phosphorus compound in a solvent, freeing it from insoluble residues and isolating it from the solution.

2. The process as claimed in claim 1, wherein the treatment is carried out in a suspending agent.

3. The process as claimed in claim 1, wherein the treatment is carried out in a solvent.

4. The process as claimed in claim 1, wherein the treatment is carried out in water.

5. The process as claimed in claim 1, wherein the treatment is carried out in the melt.

6. The process as claimed in claim 1, wherein the phosphorus compound is dissolved in a solvent, after the treatment with the metal compound, is freed from insoluble residues and is isolated from the solution.

7. The use of a hydrolysis-stable phosphorus compound of the formula I prepared as claimed in claim 1 as a stabilizer for thermoplastics.

8. A process for stabilizing thermoplastics, which comprises adding to the plastic 0.01 to 10% by weight of a phosphorus compound of the formula I which has been treated with 0.005 to 5% by weight of an oxide, a hydroxide, a carbonate, a bicarbonate or a carboxylate of a metal of groups 1a, 2a, 2b and 7b of the periodic table of the elements.

9. A thermoplastic molding composition comprising 90 to 99.9% by weight of a thermoplastic polymer and 0.01 to 10% by weight of a phosphorus compound of the formula I

$$R^3\text{-}[P(OR^2)_2]_n \qquad\qquad (I)$$

wherein

n is 1 or 2,

$R^2$ is a linear or branched $C_8$-$C_{20}$-alkyl radical or a phenyl radical, which can be substituted by one or more linear or branched $C_1$-$C_8$-alkyl radicals or by $C_5$-$C_8$-cycloalkyl, $C_6$-$C_{10}$-aryl or $C_7$-$C_{10}$-aralkyl radicals,

$R^3$, if n = 1, is a phenyl or benzyl radical, which can carry 1 to 3 substituents, an $\alpha$-methylbenzyl, $\alpha,\alpha$-dimethylbenzyl or naphthyl radical or a naphthyl radical which carries 1 to 5 substituents, in which the substituents are identical or different and are a linear or branched $C_1$-$C_8$-alkyl radical, a $C_1$-$C_8$-alkoxy radical, a $C_1$-$C_{12}$-alkylthio radical, a $C_1$-$C_8$-dialkylamino radical, a $C_6$-$C_{10}$-aryl radical, a $C_6$-$C_{10}$-aryloxy radical or halogen having an atomic number of 9 to 35 and

$R^3$, if n = 2, is a phenylene radical, a biphenylene radical, a naphthylene radical or a diphenylene oxide radical, which are unsubstituted or carry 1 to 4 linear or branched $C_1$-$C_8$-alkyl radicals,

wherein the compounds of the formula I have been treated with 0.005 to 5% by weight of an oxide, a hydroxide, a carbonate, a bicarbonate or a carboxylate of a metal of groups 1a, 2a, 2b and 7b of the periodic table of the elements.

**EP 0 576 833 B1**

**Revendications**

1.  Procédé pour la préparation de composés du phosphore trivalents stables à l'hydrolyse de formule I

$$R^3\text{-}[P(OR^2)_2]_n \qquad (I)$$

où

n vaut 1 ou 2,
$R^2$ représente un reste alkyle en $C_8$-$C_{20}$ à chaîne droite ou ramifiée ou un reste phényle, qui peut être substitué par un ou plusieurs restes alkyle en $C_1$-$C_8$ à chaîne droite ou ramifiée ou par des restes cycloalkyle en $C_5$-$C_8$, aryle en $C_6$-$C_{10}$ ou aralkyle en $C_7$-$C_{10}$,
$R^3$ pour n = 1, représente un reste phényle ou benzyle, qui peut porter 1 à 3 substituants, un reste $\alpha$-méthyl-benzyle, $\alpha,\alpha$-diméthylbenzyle ou naphtyle, ou un reste naphtyle portant 1 à 5 substituants, les substituants étant identiques ou différents et représentent un reste alkyle en $C_1$-$C_8$ à chaîne droite ou ramifiée, un reste alkoxy en $C_1$-$C_8$, un reste (alkyl en $C_1$-$C_{12}$)thio, un reste di-(alkyl en $C_1$-$C_8$)amino, un reste aryle en $C_6$-$C_{10}$, un reste aryloxy en $C_6$-$C_{10}$ ou un atome d'halogène dont le numéro atomique est de 9 à 35,
$R^3$ pour n = 2, représente un reste phénylène, un reste biphénylène, un reste naphtylène, un reste oxyde de diphényléne, qui sont non substitués ou portent 1 à 4 restes alkyle en $C_1$-$C_8$ à chaîne droite ou ramifiée,

caractérisé en ce qu'on traite les composés de formule I par une quantité de 0,005 à 5 % en masse d'un oxyde, d'un hydroxyde ou d'un carbonate des métaux lithium, calcium, baryum, magnésium, zinc et/ou manganèse, on dissout le composé du phosphore trivalent obtenu dans un solvant, on débarrasse de résidus insolubles et on l'obtient à partir de la solution.

2.  Procédé selon la revendication 1, caractérisé en ce qu'on met en oeuvre le traitement dans un agent de suspension.

3.  Procédé selon la revendication 1, caractérisé en ce qu'on met en oeuvre le traitement dans un solvant.

4.  Procédé selon la revendication 1, caractérisé en ce qu'on met en oeuvre le traitement dans l'eau.

5.  Procédé selon la revendication 1, caractérisé en ce qu'on met en oeuvre le traitement en fusion.

6.  Procédé selon la revendication 1, caractérisé en ce qu'on disscut le composé de phosphore après l'avoir traité par le composé métallique dans un solvant, on débarrasse de résidus insolubles et on l'obtient à partir de la solution.

7.  Utilisation des composés de phosphore de formule I stables à l'hydrolyse en tant que stabilisants de matières plastiques thermoplastiques.

8.  Procédé pour la stabilisation de matières plastiques thermoplastiques, caractérisé en ce qu'on ajoute aux matières plastiques de 0,01 à 10 % en masse d'un composé de phosphore de formule I, que l'on traite par une quantité de 0,005 à 5 % en masse d'un oxyde, d'un hydroxyde, d'un carbonate, d'un bicarbonate ou d'un carboxylate, d'un métal des groupes 1a, 2a, 2b et 7b de la Classification Périodique des Eléments.

9.  Matière plastique thermoplastique à mouler constituée de 90 à 99,9 % en masse d'un polymère thermoplastique et de 0,01 à 10 % en masse d'un composé du phosphore de formule I

$$R^3\text{-}[P(OR^2)_2]_n \qquad (I)$$

où

n vaut 1 ou 2,
$R^2$ représente un reste alkyle en $C_8$-$C_{20}$ à chaîne droite ou ramifiée ou un reste phényle, qui peut être substitué par un ou plusieurs restes alkyle en $C_1$-$C_8$ à chaîne droite ou ramifiée ou par des restes cycloalkyle en $C_5$-$C_8$, aryle en $C_6$-$C_{10}$ ou aralkyle en $C_7$-$C_{10}$,

$R^3$ pour n = 1, représente un reste phényle ou benzyle, qui peut porter 1 à 3 substituants, un reste $\alpha$-méthylbenzyle, $\alpha,\alpha$-diméthylbenzyle ou naphtyle, ou un reste naphtyle portant 1 à 5 substituants, les substituants étant identiques ou différents et représentent un reste alkyle en $C_1$-$C_8$ à chaîne droite ou ramifiée, un reste alkoxy en $C_1$-$C_8$, un reste (alkyl en $C_1$-$C_{12}$)thio, un reste di-(alkyl en $C_1$-$C_8$)amino, un reste aryle en $C_6$-$C_{10}$, un reste aryloxy en $C_6$-$C_{10}$ ou un atome d'halogène dont le numéro atomique est de 9 à 35,
$R^3$ pour n = 2, représente un reste phénylène, un reste biphénylène, un reste naphtylène, un reste oxyde de diphénylène, qui sont non substitués ou portent 1 à 4 restes alkyle en $C_1$-$C_8$ à chaîne droite ou ramifiée,

caractérisé en ce qu'on traite les composés de formule I par une quantité de 0,005 à 5 % en masse d'un oxyde, d'un hydroxyde, d'un carbonate, d'un bicarbonate ou d'un carboxylate, d'un métal des groupes 1a, 2a, 2b et 7b de la Classification Périodique des Eléments.